# EUROPÄISCHE PATENTANMELDUNG

(11) **EP 0 678 281 A1**
(43) Veröffentlichungstag der Anmeldung: **25.10.1995**
(21) Anmeldenummer: 94104959.5
(22) Anmeldetag: 29.03.1994
(51) Int. Cl.: A61C 5/12

(54) **Zahnrekonstruktionshilfsmittel**

(30) Priorität: 23.03.1994 EP 94104692
(71) Anmelder: Thiele, Torsten, Dr., D-73326 Deggingen (DE)
(72) Erfinder: Thiele, Torsten, Dr., D-73326 Deggingen (DE)
(74) Vertreter: Riederer Freiherr von Paar zu Schönau, Anton

(57) **Zusammenfassung**

Es wird ein Zahnrekonstruktionshilfsmittel (1) beschrieben, das als Anpreßelement zum seitlichen Anpressen einer um einen zu rekonstruierenden Zahn (11) gelegten Matrize (17), die als Formelement für eine in einem Zahnsubstanzdefekt (13) anzubringende Füllung fungiert, an den Zahn auf derjenigen Seite, die mit einem natürlichen Spalt (21) an die Seite eines benachbarten Zahns (15) angrenzt, dient und dadurch gekennzeichnet ist, daß es aus einem elastischen Material besteht und eine langgestreckte Form mit einer Gesamtquerabmessung aufweist, die im entlasteten Zustand wenigstens abschnittsweise mindestens gleich der des natürlichen Spalts (21) abzüglich der Wandstärke der Matrize (17) ist und die sich bei einer Zugdehnung so weit verringert, daß sie kleiner ist als der natürliche Spalt (21). Das Zahnrekonstruktionshilfsmittel kann also in gestrecktem Zustand in den Spalt zwischen zwei Zähnen eingeführt werden und durch Loslassen dazu gebracht werden, die Matrize dicht anzupassen.

## Beschreibung

Die Erfindung betrifft ein Zahnrekonstruktionshilfsmittel zur Verwendung als Anpreßelement zum seitlichen Anpressen einer um einen zu rekonstruierenden Zahn gelegten Matrize, die als Formelement für eine in einem Zahnsubstanzdefekt anzubringende Füllung fungiert, an den Zahn auf derjenigen Seite, die mit einem natürlichen Spalt an die Seite eines benachbarten Zahns angrenzt. In den meisten Fällen preßt das Zahnrekonstruktionshilfsmittel die Matrize besonders in der Nähe des Zahnfleisches an den Zahn an. Unter einem Zahnsubstanzdefekt versteht man eine Fehlstelle bzw. ein Loch im Zahn, die beispielsweise durch eine Erkrankung des Zahns oder durch die Entfernung von Zahnsubstanz im Rahmen der Zahnbehandlung entstanden sind.

Im Rahmen der Zahnrekonstruktion ist es häufig erforderlich, schadhafte Stellen eines Zahns zu entfernen und die dadurch entstandenen Defekte mit einem geeigneten Füllmaterial auszubessern. Nach der Entfernung der schadhaften Bereiche im Zahnmantel (d.h.in einer der Seitenflächen des Zahns) legt man, um das entstandene Loch auszufüllen und so die ursprüngliche Form des Zahns wiederherzustellen, vor dem Einbringen des Füllmaterials eine sogenannte Matrize um den Zahn herum, die als Schalung bzw. Formelement für die einzubringende Füllmasse wirkt. Menschliche Zähne besitzen verschiedene Formgebungen, insbesondere tritt bei den Schneide- und Eckzähnen ein sich verjüngender Zahnhals auf und bei den Prämolaren und den Molaren sind sehr komplexe Ausformungen des Zahnhalses zu finden. Aufgrund der sich in Richtung zum Zahnfleisch konisch verjüngenden oder unregelmäßig verlaufenden Form der Zähne entsteht bei der Verwendung üblicher zylindermanschettenförmiger Matrizen, die sich mit Hilfe von Spannelementen entlang dem größten Querschnitt des Zahns um diesen spannen lassen, am Zahnhals in der Nähe des Zahnfleischs zwischen der Matrize und dem Zahn ein mehr oder weniger großer Zwischenraum bzw. eine Anzahl von kleineren Zwischenräumen. Für das saubere und korrekte Einfüllen der Füllmasse ist es erforderlich, daß dieser Zwischenraum zwischen dem Zahn und der Matrize beseitigt wird, damit die Füllmasse sich nicht über den Defekt hinaus entlang der Zahnoberfläche apicalwärts ausbreitet. Dabei wird angestrebt, daß nach der Zahnrekonstruktion einerseits im Bereich des Zahnhalses zwischen den benachbarten Zähnen der natürliche Spalt verbleibt, während andererseits das Loch vollständig mit Füllmasse aufgefüllt sein soll. Der natürliche Kontaktpunkt zum benachbarten Zahn soll ebenfalls erhalten bleiben oder wiederhergestellt werden.

Bisher versucht man, den Zwischenraum durch ein Anpressen der Matrize an den Zahn mit Hilfe kleiner Keile, die zwischen dem benachbarten Zahn und der Matrize eingeschoben werden, zu verkleinern. Diese Keile bestehen aus Holz oder aus einem festen Kunststoff und sind in verschiedenen Größen erhältlich. Teilweise sind diese Keile mit einer Krümmung versehen, die aber nur in den seltensten Fällen der Krümmung des Zahnhalses entspricht. Den komplexen Zahnhalsformen, insbesondere denen der Molaren, sind diese Keile nie optimal angepaßt. Weiterhin erfordert ihre Anwendung große Geschicklichkeit, wenn ein einwandfreies Resultat angestrebt wird, bzw. gewährleistet sie kein optimales Anliegen der Matrize an einer großen Fläche des Zahns, sondern führt aufgrund der im wesentlichen ebenen Keilfläche, der abgerundeten oder komplexen Zahnform und der Steifigkeit der Matrize nur zu einer punktweisen Anlage der Matrize am Zahn. Die schlechte Handhabbarkeit und die zwangsläufige Diskrepanz zwischen den Keilformen und den Zahnformen führt somit zur Gefahr des Eintretens von Füllmasse in die Zwischenräume zwischen der Matrize und dem Zahn, und im Ergebnis kann dies zu schlechten Zahnrekonstruktionen und zu einer erhöhten Anfälligkeit des rekonstruierten Zahns gegenüber erneuten Erkrankungen führen.

Durch die Erfindung soll ein Zahnrekonstruktionshilfsmittel zur Verfügung gestellt werden, das einfach und billig herzustellen ist, keine Probleme in der Anwendung bereitet und nahezu automatisch zu einem guten Ergebnis führt.

Diese Aufgabe wird dadurch gelöst, daß das Zahnrekonstruktionshilfsmittel aus einem elastischen Material besteht und eine langgestreckte Form mit einer Gesamtquerabmessung aufweist, die im entlasteten Zustand wenigstens abschnittsweise mindestens gleich der des natürlichen Spalts abzüglich der Wandstärke der Matrize ist und die sich bei einer Zugdehnung so weit verringert, daß sie kleiner ist als der natürliche Spalt. Das Anpressen der Matrize soll gewöhnlich mit einer mäßigen Kraft erfolgen. Daher wird die Gesamtquerabmessung des Zahnrekonstruktionshilfsmittels meist so ausgewählt, daß sie etwas größer oder wenigstens genauso groß wie die des natürlichen Spalts ist. Für menschliche Gebisse kann von einer Maximalweite des natürlichen Spalts von 4 mm ausgegangen werden. Bei breiteren Spalten, etwa im Fall einer Zahnlücke, handelt es sich nicht mehr um eine Behandlung im Zahnspaltbereich, jedoch wäre bei einer geeigneten Dimensionierung der Einsatz des Zahnrekonstruktionshilsmittels auch bei größeren Zahnabständen möglich.

Unter elastischen Materialien im Sinne der Erfindung sind alle Materialien zu verstehen, die die Eigenschaft besitzen, nach der Entlastung eine durch äußere Kräfte verursachte Formänderung wieder aufzuheben und danach die ursprüngliche Gestalt im wesentlichen wieder anzunehmen.

Dieses Zahnrekonstruktionshilfsmittel wird nach einer Zugdehnung im gedehnten Zustand an der Außenseite der Matrize zwischen zwei benachbarten Zähnen angeordnet, woraufhin es sich nach seiner Entlastung automatisch zusammenzieht und die Matrize durch die sich aus der elastischen Eigenschaft des Zahnrekonstruktionshilfsmittels ergebende zweidimensionale Vergrößerung der Querabmessung beim Zusammenziehen in Längsrichtung entlang einer großen Fläche sicher an den Zahn angepreßt wird.

Bei einer vorteilhaften Ausführungsform der Erfindung hat das Zahnrekonstruktionshilfsmittel im entspannten Zustand die Form eines Vollzylinders, dessen Durchmesser ca. 10 bis 200 % größer als die Breite des natürlichen Spalts ist. Diese Ausführungsform läßt sich besonders einfach und kostengünstig herstellen, beispielsweise durch ein Spritzgußverfahren. Bei ihrem Einsatz muß der Anwender nicht auf eine speziell geeignete Lage, die sich aus einer unsymmetrischen Querschnittsform ergeben könnte, achten, wodurch die Handhabung vereinfacht wird.

Bei einer zweiten Ausführungsform besteht das Zahnrekonstruktionshilfsmittel aus einer Vielzahl von elastischen Einzelfäden, die in Längsrichtung im wesentlichen parallel zueinander verlaufen und an beiden Enden untereinander zu einem Bündel zusammengefaßt sind. Diese multifilamentäre Ausführung des Zahnrekonstruktionshilfsmittels ermöglicht ein erleichtertes Einführen in den natürlichen Spalt, indem die Einzelfäden teilweise nacheinander im gespannten Zustand in den natürlichen Spalt eingebracht werden, und sie können sich dort abhängig von der Form des Spalts so verteilen, daß ein möglichst gleichmäßiger Anpreßdruck über einen großen Bereich auf die Matrize wirkt.

Eine dritte Ausführungsform zeichnet sich dadurch aus, daß das Zahnrekonstruktionshilfsmittel im entspannten Zustand die Form eines länglichen Profilstabs wie etwa eines Trapezoids oder eines Quaders hat, dessen Querabmessung wenigstens abschnittsweise ca. 10 bis 200 % größer als die Breite des natürlichen Spalts ist. Da die Formgestaltung der natürlichen Spalte zwischen benachbarten Zähnen sehr unterschiedlich sein kann, sind Ausführungsformen mit einer Formgestaltung, die von der des Vollzylinders abweicht, bei manchen Gebissen zu bevorzugen. Außer trapez- und rechteckförmigen Querschnitten können auch dreieckförmige Querschnitte vorteilhaft sein.

Eine weitere Ausführungsform ist dadurch gekennzeichnet, daß sie einen Hohlprofilquerschnitt besitzt, dessen äußere Begrenzungskanten im entspannten Zustand sternförmig oder kreisförmig verlaufen. Die Verwendung des Hohlprofilquerschnitts ermöglicht besonders elastische und verformbare Varianten des Zahnrekonstruktionshilfsmittels, die sich der natürlichen Form des Spalts sehr gut anpassen.

Eine universelle Ausführungsform zeichnet sich dadurch aus, daß das Zahnrekonstruktionshilfsmittel einen Dehnungsbereich mit entlang seiner Längserstreckung sich stetig oder stufenweise änderndem Querschnitt hat, so daß der Zahnarzt durch Justierung der Längsposition einen dem jeweiligen Zahnspalt angepaßten Querschnitt des Zahnrekonstruktionshilfsmittels wählen kann. In noch weiterer Differenzierung dieser Ausführungsform können die Elastizitäten der Bereiche unterschiedlichen Querschnitts verschieden sein, um die Dehnungen bzw. Querschnittsverringerungen gleichmäßig über die Länge zu verteilen.

Als Material für das Zahnrekonstruktionshilfsmittel ist synthetischer Kautschuk besonders geeignet, wobei K-Werte von 35 bis 100 zu bevorzugen sind. Die Verwendung von Kautschuk und Gummi als elastisches Material ermöglicht eine kostengünstige Produktion von Einnmal-Produkten und erlaubt so auf einfache Weise die Einhaltung der hygienischen Anforderungen, die im zahnmedizinischen Bereich gestellt werden. Andere Ausführungsformen sind durch eine geeignete Materialwahl speziell dafür ausgelegt, daß eine Wiederverwertbarkeit bzw. eine Sterilisation nach bekannten Verfahren in der Zahnarztpraxis erfolgen kann. Die Elastizität des Materials zumindest im Dehnungsabschnitt stellt eine Variable dar, die dem Zahnarzt verschiedene Möglichkeiten an die Hand gibt, durch geeignete Wahl die Matrize ausreichend anzupressen, ohne die benachbarten Zähne zu gefährden und ohne dem Patienten Unannehmlichkeiten zu bereiten.

Weiterhin besteht die Möglichkeit, daß das elastische Material aus miteinander verbundenen Komponenten besteht, von denen beispielsweise nur ein Teil elastisches Verhalten zeigt. Durch die Kombination mehrerer Materialkomponenten lassen sich bei dem Zahnrekonstruktionshilfsmittel weitere günstige Eigenschaften erzielen. So kann bei einer Ausführungsform das ganze Zahnrekonstruktionshilfsmittel aus lichtleitendem elastischen Material gefertigt sein, oder ein lichtleitender Bereich in das Zahnrekonstruktionshilfsmittel integriert sein, der zur Beleuchtung der zu behandelnden Bereiche des Zahns verwendet werden kann. Bei der Zahnrekonstruktion kommen derzeit in zunehmendem Maße als Füllmassen auch lichtaushärtende Kunststoffe zum Einsatz, die nach dem Einbringen in die zu füllenden Löcher bzw. Defekte zum Aushärten mit einer geeigneten Strahlung beaufschlagt werden müssen, deren Art, Einwirkdauer und Intensität von der Füllmasse abhängen. Über den genannten lichtleitenden Bereich kann die zur Aushärtung der Kunststoffüllmaterialien erforderliche Strahlung (z. B. ultraviolette Strahlung) an die Füllmasse herangeführt werden. Die Verwendung eines lichtleitenden Materials, dessen Brechungsindex sich bei einer Dehnung ändert, ermöglicht die Beeinflussung der Austrittsstelle für die entsprechende Strahlung.

Das Zahnrekonstruktionshilfsmittel kann in der Abgabeform einzelner einige Zentimeter langer Stücke hergestellt werden. Bei einer anderen Ausführungsform erweist sich die Lieferung des Zahnrekonstruktionshilfsmittels als Meterware als geeignet, wobei eine größere Länge des Materials in einem Spendergehäuse aufbewahrt wird, welches eine Entnahme des Zahnrekonstruktionshilfsmittels in beliebigen Längen ermöglicht, beispielsweise durch eine am Spendergehäuse befestigte Schneidklinge.

Aufgrund der Vielfalt der Formen der zwischen den Zähnen auftretenden natürlichen Spalte ist die Bereitstellung des Zahnrekonstruktionshilfsmittels in verschiedenen Formen, Größen, Dicken und Elastizitäten nützlich. Um die korrekte Auswahl zu vereinfachen, erweist sich eine Ausführungsform als zweckmäßig, bei der die Eigenschaften durch eine spezielle Farbe des Materials oder durch andere geeignete Kennzeichnungen gekennzeichnet sind. Während die Größe, Dicke und Form auch von außen sichtbar sind, kann die Elastizität nur durch einen Kennzeichnungs-Code, insbesondere eine Code-Farbe kenntlich gemacht werden. Durch Farbringe oder dergleichen können die verschiedenen Eigenschaften markiert werden, einschließlich der kommerziellen Darreichung, um dem Zahnarzt die schnelle Wahl zu erleichtern.

Weitere Vorteile, Weiterbildungen und Einzelheiten der Erfindung werden anhand einiger Ausführungsbeispiele unter Bezugnahme auf die Zeichnung erläutert. Es zeigen:
- Fig. 1: ein Zahnrekonstruktionshilfsmittel im entlasteten und im gespannten Zustand, jeweils in einer Draufsicht auf eine Längsseite und in einer in einer Schnittebene A-A geschnittenen Seitenansicht;
- Fig. 2: eine Schnittansicht von zwei benachbarten Zähnen und dem zwischen diesen Zähnen angeordneten Zahnrekonstruktionshilfsmittel in zwei verschiedenen Arbeitsstellungen;
- Fig. 3: eine vertikale und eine horizontale Schnittansicht von zwei benachbarten Zähnen mit dem Zahnrekonstruktionshilfsmittel;
- Fig. 4: eine zweite Ausführungsform des Zahnrekonstruktionshilfsmittels in einer Draufsicht auf eine Längsseite und in einer in einer Schnittebene A-A geschnittenen Seitenansicht;
- Fig. 5: eine dritte Ausführungsform des Zahnrekonstruktionshilfsmittels in einer Draufsicht auf eine Längsseite;
- Fig. 6: eine vierte Ausführungsform des Zahnrekonstruktionshilfsmittels in einer perspektivischen Ansicht;
- Fig. 7: eine fünfte Ausführungsform des Zahnrekonstruktionshilfsmittels in einer Draufsicht auf eine Längsseite.

Anhand der Fig.n 1 und 2 wird nachfolgend der prinzipielle Aufbau und die Verwendung eines Zahnrekonstruktionshilfsmittels 1 beschrieben. Das Zahnrekonstruktionshilfsmittel 1 besteht in einer ersten Ausführungsform im wesentlichen aus einem etwa stiftförmigen länglichen Vollzylinder aus elastischem Material. Im entlasteten Zustand besitzt es einen kreisrunden Querschnitt, der im wesentlichen über die gesamte Länge unverändert ist. Quer zu seiner Längserstreckung ist es symmetrisch und in Längsrichtung ist es in einzelne Funktionsabschnitte unterteilt. An den beiden äußeren Enden befindet sich jeweils ein Griffabschnitt 3, der sich dadurch auszeichnet, daß sich an seiner Oberfläche eine Vielzahl von kleinen Noppen 5 befinden, die die Griffabschnitte rauh machen und ein sicheres Greifen und Halten des Zahnrekonstruktionshilfsmittels ermöglichen. Die Noppen 5 können direkt an der Oberfläche angeformt sein, was eine einfache Herstellung des Zahnrekonstruktionshilfsmittels ermöglicht. Bei einer anderen Ausführungsform ist der Griffabschnitt 3 nicht integral mit den anderen Abschnitten des Zahnrekonstruktionshilfsmittels, sondern stellt ein separates Element dar, welches mit dem anschließenden Abschnitt verbunden ist.

An den Griffabschnitt 3 schließt sich ein kurzer Übergangsabschnitt 7 an. Ebenso wie der Griffabschnitt 3 kann der Übergangsabschnitt 7 integral mit den anderen Abschnitten sein oder als separater Abschnitt für die Verbindung der angrenzenden Abschnitte dienen. Den in seiner Längserstreckung größten Abschnitt bildet ein elastischer Dehnungsbereich 9, der sich zwischen den beiden Übergangsabschnitten 7 erstreckt. Der elastische Dehnungsbereich 9 zeigt bei einer in Längsrichtung wirkenden Zugdehnung ein elastisches Verhalten, d. h. der Dehnungsbereich sucht nach dem Wegfall einer äußeren Zugkraft, die an den Griffabschnitten 3 angreift und über die Übergangsabschnitte 7 auf den elastischen Dehnungsbereich 9 einwirkt, seine ursprüngliche Gestalt wieder anzunehmen, wobei die verursachte Formänderung, die bei der Zugbelastung in drei Richtungen stattgefunden hat, aufgehoben wird. Sofern sich der Dehnungsbereich 9 bei der Entspannung innerhalb von Begrenzungswänden befindet, die eine Annahme der Ursprungsform nicht zulassen, wird er sich unter bestmöglicher Anpassung an diese Wände anpressen.

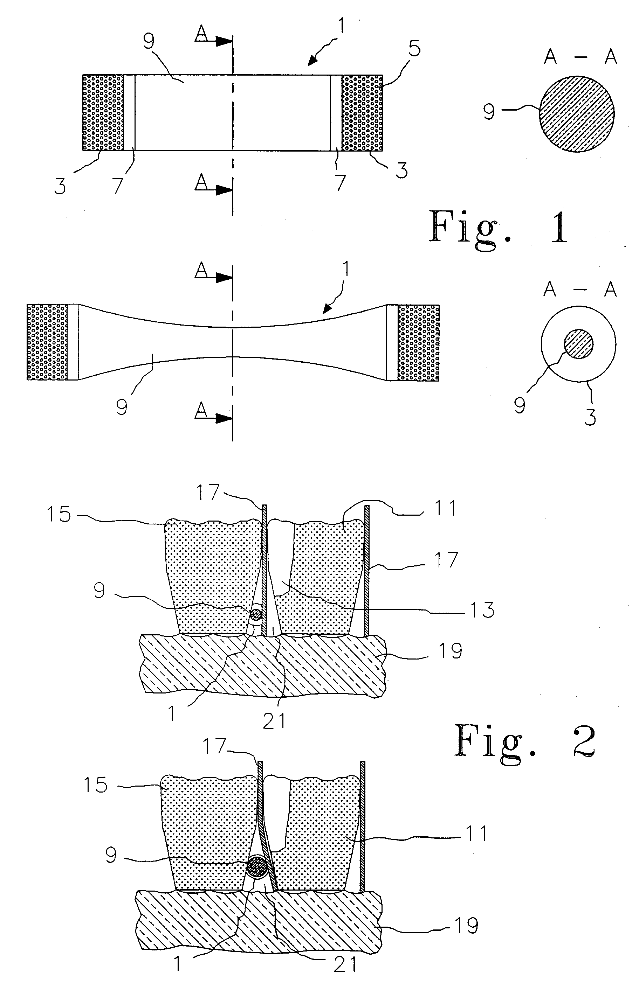

In der unteren Ansicht der Fig. 1 ist das Zahnrekonstruktionshilfsmittel 1 im gespannten Zustand dargestellt, wobei es eine sich von beiden Seiten zur Mitte zu gleichmäßig verjüngende Form angenommen hat. Aus der zugehörigen seitlichen Schnittansicht ist erkennbar, daß es bei der dargestellten Ausführungsform des Zahnrekonstruktionshilfsmittels bei einer Zugbelastung zu einer deutlichen Querschnittsverringerung mit einer Taille in der Mitte des elastischen Dehnungsbereichs 9 kommt, währenddessen die Griffabschnitte 3 und die Übergangsabschnitte 7, ebenso wie die äußersten Bereiche des elastischen Dehnungsbereichs 9 kaum eine Formveränderung erfahren. Sofern die Griffabschnitte 3 und die Übergangsabschnitte 7 mit dem Dehnungsbereich 9 integral sind und ebenfalls aus elastischem Material bestehen, werden jedoch auch sie bei der Einwirkung der Zugkraft einer gewissen Dehnung unterzogen.

Die Art der Formänderung ist weiterhin von der Materialart und der Struktur abhängig. Grundsätzlich kann das Zahnrekonstruktionshilsmittel auch ohne spezielle Griffabschnitte 3 und Übergangsabschnitte 7 als homogener elastisch dehnbarer Stab ausgebildet sein, bei dem sich dann die Formänderung auf die Strecke zwischen den Zugangriffspunkten verteilt. Ebenso können Ausführungsformen zum Einsatz kommen, die im entspannten Zustand einen Querschnittsverlauf besitzen, der im wesentlichen dem in der unteren Abbildung von Fig. 1 gezeigten entsprechen. Das Zahnrekonstruktionshilfsmittel hat also im entspannten Zustand einen sich von den beiden Endseiten her verjüngenden Querschnitt. Dies vereinfacht das Einbringen in den Spalt und die Längsdehnung und bewirkt eine verbesserte Anpressung der Matrize in den Bereichen, die in axialer Richtung des Zahnrekonstruktionshilfsmittels entfernt von der engsten Stelle des natürlichen Spalts liegen. Speziell kann der Zahnarzt durch eine Längsverschiebung des Zahnrekonstruktionshilfsmittels im natürlichen Spalt in gewissem Umfang den aktiven Querschnitt wählen.

Die Verwendung des Zahnrekonstruktionshilfsmittels wird unter Berücksichtigung von Fig. 2 deutlich. Bei der Behandlung von Zahnerkrankungen (z. B. Karies) kann es notwendig werden, an einem ersten Zahn 11 einen krankhaften oder zerstörten Bereich zu entfernen, wodurch ein Loch 13 entsteht, welches mit Füllmasse ausgefüllt werden muß. Wenn sich das Loch 13 an einer Seite des Zahns 11 befindet, die an einen benachbarten Zahn 15 angrenzt, ist es beim Auffüllen des Lochs 13 mit der Füllmasse zweckmäßig, eine Matrize 17 über den Zahn 11 zu stülpen, die als Form für die einzubringende Füllmasse dient. Beim Auffüllen des Lochs 13 mit Füllmasse soll nämlich vermieden werden, daß ein Anteil der Füllmasse sich an der Zahnaußenseite festsetzt. Die Matrize 17 besteht aus einem relativ verwindungssteifen Material, welches einer beim Einfüllen der Füllmasse in das Loch 13 erforderlichen von außen aufzubringenden Druckkraft standhält. Sie wird mit bekannten Hilfs- und Haltemitteln um den Zahn 11 gespannt.

Die menschlichen Zähne haben in der Regel eine Form, die sich in Richtung zum Zahnfleisch 19 konisch verjüngt. Dadurch entsteht zwischen dem ersten Zahn 11 und dem benachbarten Zahn 15 ein natürlicher Spalt 21, der sich in Richtung zum Zahnfleisch 19 erweitert. Da mit den üblichen Hilfsmitteln nur eine über die Quererstreckung der Matrize 17 gleichmäßige Spannung erfolgen kann, liegt die Matrize 17 nach dem Überstülpen über den Zahn 11 und dem Spannen zunächst nur an dessen größtem Umfangsbereich an, wie es in der oberen Abbildung von Fig. 2 ersichtlich ist.

Damit sich die Matrize 17 auch in dem konisch verjüngten Bereich des Zahns 11, der sich in der Nähe des Zahnfleischs 19 befindet, in einem möglichst großen Flächenbereich an den Zahn 11 anlegt, bringt der behandelnde Zahnarzt zunächst das Zahnrekonstruktionshilfsmittel 1 von dem in der oberen Ansicht von Fig. 1 gezeigten entlasteten Zustand durch eine Zugbeanspruchung in Längsrichtung in den gespannten Zustand, der in der unteren Ansicht von Fig. 1 gezeigt ist, indem er an den Griffabschnitten 3 zieht. Je nach Höhe der Zugspannung kann der behandelnde Arzt den resultierenden Durchmesser des Zahnrekonstruktionshilfsmittels im Dehnungsbereich 9 so weit verringern, daß das Zahnrekonstruktionshilfsmittel in den natürlichen Spalt 21 eingebracht werden kann. Je nach der Breite des natürlichen Spalts 21 geschieht dies vor oder besser nach dem Überstülpen der Matrize 17. Das Vorbeiführen des Zahnrekonstruktionshilfsmittels 1 im gespannten Zustand entlang der Matrize 17 von der Oberseite der Zähne 11, 15 wird dadurch erleichtert, daß die Zähne um einen geringen Betrag seitlich verkippt werden können, da sie im Kiefer federnd gehalten sind. Es ist jedoch erforderlich, daß die Zähne nur geringfügig und nur für kurze Zeit aus ihrer natürlichen Lage verkippt werden, um sicherzustellen, daß der Kontaktpunkt im oberen Bereich der benachbarten Zähne erhalten bleibt, der für die Stabilität der Zähne im Kiefer große Bedeutung hat. Dies wird durch die Verwendung des erfindungsgemäßen Zahnrekonstruktionshilfsmittels ermöglicht, da die Zähne nur im Moment des Einbringens des Hilfsmittels kurzzeitig seitlich belastet werden.

In der oberen Ansicht der Fig. 2 ist das Zahnrekonstruktionshilfsmittel 1 im noch gespannten Zustand dargestellt. Der Durchmesser des elastischen Bereichs 9 ist soweit verringert, daß keine Druckkraft auf die Matrize 17 einwirkt, die Bereiche größeren Durchmessers befinden sich vor und hinter den Zähnen 11, 15. Nach dem Einbringen und Positionieren des Zahnrekonstruktionshilfsmittels 1 kann der behandelnde Arzt dieses durch Loslassen der Griffabschnitte 3 entspannen, wodurch es automatisch zu dessen Zusammenziehen in Längsrichtung und zur Erhöhung des Durchmessers des elastischen Dehnungsbereichs 9 kommt und eine seitliche Kraft auf die Matrize 17 ausgeübt wird, die diese an den Zahn 11 in einem großen Bereich anpreßt. Durch das elastische Verhalten des Dehnungsbereichs 9 paßt sich das Zahnrekonstruktionshilfsmittel 1 der natürlichen Form des Zahns 11 an. Damit liegt die Matrize in einem relativ großen Bereich flächig am Zahnhals an, d.h. eine nur punktförmige Anlage der Matrize wird sicher vermieden. Auf diese Weise wird das Auslaufen der Füllmasse aus dem Loch 13 und die Verstopfung des natürlichen Spalts 21 mit Füllmasse verhindert. Nach dem Aushärten der Füllmasse bringt der behandelnde Arzt durch das Ziehen an den Griffabschnitten 3 in Längsrichtung des Zahnrekonstruktionshilfsmittels 1 dieses erneut in den gespannten Zustand, wodurch sich der Durchmesser im elastischen Bereich 9 verringert. Im gespannten Zustand kann das Zahnrekonstruktionshilfsmittel also leicht wieder aus dem natürlichen Spalt 21 entfernt werden. Gegebenenfalls kann das gespannte Zahnrekonstruktionshilfsmittel auch in der Nähe des Zahns zerschnitten werden, wodurch es sich seitlich aus dem Spalt entfernen läßt.

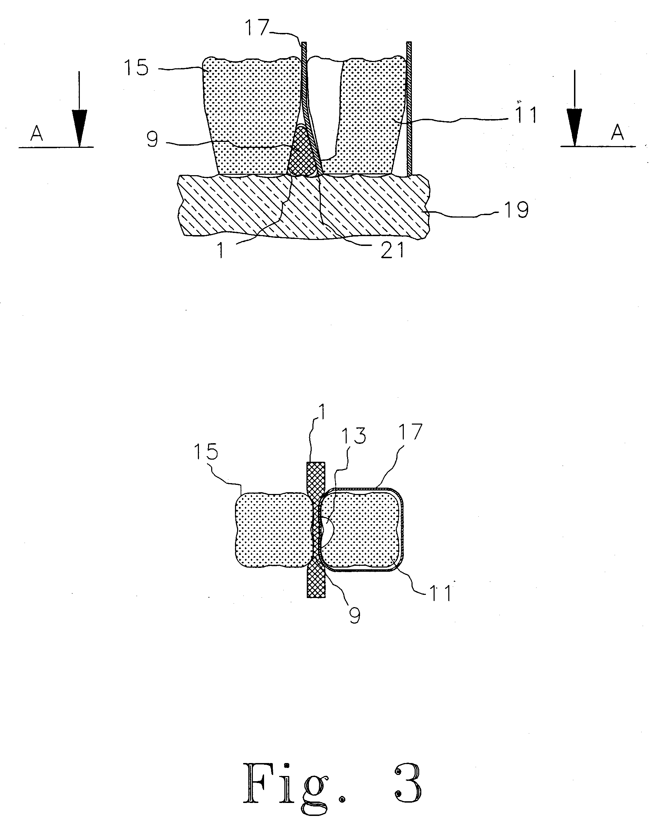

In der Fig. 3 ist der Einsatz des Zahnrekonstruktionshilfsmittels nochmals dargestellt, wobei die Wirkung deutlicher wird. Das in diesem Beispiel gezeigte Zahnrekonstruktionshilfsmittel 1 besitzt gegenüber dem in Fig. 2 dargestellten eine höhere Elastizität, so daß es im entspannten Zustand noch besser die Form des natürlichen Spalts annimmt, diesen besser ausfüllt und die Matrize 17 besser an den Zahn 11 anpaßt. In der oberen Abbildung von Fig. 3 ist daher der natürliche Spalt nahezu vollständig ausgefüllt, der Querschnitt des Dehnungsbereichs 9 nimmt eine Trapez- bzw. Dreieckform an. Es ist erkennbar, daß die Matrize 17 großflächig an den Zahn 11 angepreßt wird, da der Dehnungsbereich 9 in einem großen Bereich anliegt.

Die untere Abbildung der Fig. 3 zeigt die Horizontalschnittansicht entlang einer Schnittebene A-A, in der oberen Abbildung. Es ist gut erkennbar, wie sich das Zahnrekonstruktionshilfsmittel 1 insbesondere auch in den abgerundeten Eckbereichen der benachbarten Zähne 11, 15 an die Form der Zähne anpaßt und dadurch die Matrize 17 an den zu behandelnden Zahn 11 in einem großen Bereich anpreßt. Die Matrize 17 liegt nahezu über den gesamten Bereich der Seitenfläche, die an den natürlichen Spalt grenzt, am Zahn an, im Gegensatz zu den drei anderen Seitenflächen, an denen die Matrize entlang der größten Umfangslinie des Zahns anliegt, die sich im Bereich nahe der Kaufläche befindet, der in der unteren Abbildung weggeschnitten ist. Andererseits wird die Matrize aufgrund ihrer Steifigkeit nicht in den Bereich des Lochs 13, welches mit Füllmasse aufgefüllt werden soll, eingedrückt, so daß das Auffüllen nicht behindert wird.

Die Formgestaltung des Zahnrekonstruktionshilfsmittels hängt weitgehend von der natürlichen Gestaltung der Zähne und des natürlichen Spalts 21 ab. In der Praxis stehen dem Zahnarzt verschiedene Querschnittsformen und Abmessungen zum Einsatz zur Verfügung. Es ist zweckmäßig, wenn die einzelnen Varianten bezüglich der Abmessungen, Elastizität und Formen in einem Sortiment zusammengestellt sind, welches Verwendungen in allen vorkommenden Spaltformen ermöglicht. Die Auswahl der am besten geeigneten Ausführungsform mit den entsprechenden Abmessungen und Elastizitätseigenschaften richtet sich einerseits nach der Gestaltung des Spalts, wobei ein optimales Anliegen der Matrize am Zahn angestrebt wird, und andererseits spielt die Füllmasse und die Art des Einbringens in das Loch eine Rolle, wobei das Zahnrekonstruktionshilfsmittel auf die Matrize eine geeignete Druckkraft ausüben muß, d. h. die Matrize soll nicht in das Loch hineingepreßt werden und soll der durch die Füllmasse vermittelten Druckkraft und der Methode der Einbringung standhalten.

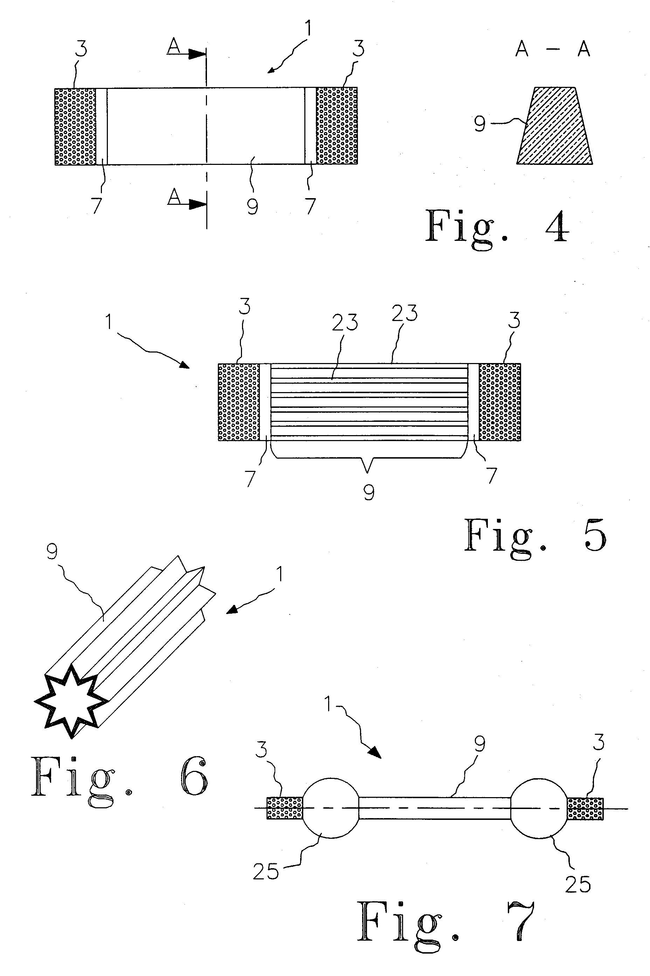

Bei einer in Fig. 4 gezeigten zweiten Ausführungsform des Zahnrekonstruktionshilfsmittels 1 besitzt zumindest der elastische Bereich 9 einen trapezförmigen Querschnitt, was aus der Schnittdarstellung erkennbar ist. Bei der gezeigten zweiten Ausführungsform sind die Übergangsabschnitte 7 und die Griffabschnitte 3 ebenfalls trapezförmig ausgeführt. In anderen Ausführungsformen können diese Abschnitte jedoch von der Querschnittsform des elastischen Bereichs 9 abweichen. Der trapezförmige Querschnitt des elastischen Bereichs 9 bewirkt bei einem entsprechend gestalteten natürlichen Spalt 21 eine noch bessere Anpressung der Matrize 17 an den Zahn 11.

Die in Fig. 5 gezeigte dritte Ausführungsform besitzt wiederum Griffabschnitte 3 und Übergangsabschnitte 7. Der elastische Dehnungsbereich 9 besteht aus einer Vielzahl einzelner Fäden 23, die ihrerseits elastisches Verhalten zeigen. Die einzelnen Fäden 23 sind in den Übergangsabschnitten 7 zu einem Bündel zusammengefaßt. Diese Ausführungsform ist besonders universell einsetzbar, da sich die einzelnen Fäden 23 beim Einlegen in den natürlichen Spalt 21 optimal den unterschiedlichen Formen des natürlichen Spalts anpassen können.

Als weiteres Beispiel der Gestalt des Zahnrekonstruktionshilfsmittels ist in Fig. 6 eine vierte Ausführungsform gezeigt, die sich durch einen Hohlprofilquerschnitt auszeichnet, dessen äußere Begrenzungskanten im entspannten Zustand sternförmig verlaufen. Diese Formgestaltung wirkt sich sowohl auf die sichere Handhabung beim Spannen des Zahnrekonstruktionshilfsmittels als auch auf die gewünschte optimale Ausfüllung des natürlichen Spalts 21 vorteilhaft aus. Bei der Ausführungsform von Fig. 6 fehlen die Griffabschnitte 3 und die Übergangsabschnitte 7. Der behandelnde Arzt greift daher direkt am elastischen Bereich 9 an. Diese Gestaltung ermöglicht die Lieferung des Zahnrekonstruktionshilfsmittels als Meterware, die beispielsweise in einem an sich bekannten Spendergehäuse aufbewahrt wird und aus diesem in den gewünschten Längen entnommen werden kann.

Fig. 7 zeigt eine fünfte Ausführungsform des Zahnrekonstruktionshilfsmittels, die wiederum eine veränderte Querschnittsform besitzt. An den äußeren Enden befinden sich die Griffabschnitte 3 und im Mittelbereich ist wie erläutert der Dehnungsbereich 9 vorgesehen. Zwischen den Griffabschnitten und dem Dehnungsbereich befinden sich zwei Anpreßabschnitte 25, die beispielsweise eine kugelartige Form besitzen. Diese Anpreßabschnitte 25 erfüllen eine doppelte Funktion, einerseits ermöglichen sie beim Spannen des Zahnrekonstruktionshilfsmittels ein besseres Angreifen und Festhalten der Enden, da sie gleichzeitig mit den Griffabschnitten 3 gefaßt werden können, andererseits unterstützen sie die Anpreßfunktion bezüglich der Matrize. Sofern die Länge des Dehnungsbereichs 9 richtig ausgewählt wird, pressen die Anpreßabschnitte 25 die Matrize in den in axialer Richtung von der engsten Stelle des natürlichen Spalts entfernteren Bereichen besser an den Zahn an. Diese Ausführungsform wird in der Praxis daher in mehreren Varianten zur Verfügung gestellt, die sich nicht nur in der Querabmessung des Dehnungsbereichs, sondern auch in dessen Länge unterscheiden.

Bei der praktischen Ausführung des Zahnrekonstruktionshilfsmittels erweist es sich allgemein als zweckmäßig, wenn verschiedene Breiten und Längen zur Verfügung stehen. Zweckmäßige Querabmessungen des Zahnrekonstruktionshilfsmittels liegen im Bereich von 1 bis 8 mm im entspannten Zustand, wobei die Elastizität des elastischen Bereichs so ausgelegt ist, daß eine Verringerung der Querabmessungen auf 0,5 bis 2 mm möglich ist. Hierfür eignen sich z. B. Gummimaterialien mit K-Werten von 67, 73 und 87. Sofern das Zahnrekonstruktionshilfsmittel nicht als Meterware geliefert wird, sind Längsabmessungen von 20 bis 40 mm besonders geeignet.

Um dem behandelnden Zahnarzt eine einfache Unterscheidung der verschiedenen Ausführungen des Zahnrekonstruktionshilfsmittels, die sich in ihren Quer- und Längsabmessungen und in den Elastizitätswerten unterscheiden, zu ermöglichen, tragen die unterschiedlichen Zahnrekonstruktionshilfsmittel entweder geeignete Farb- oder Symbolkennzeichnungen, oder die elastischen Materialien selbst sind unterschiedlich eingefärbt. Insbesondere sollen die folgenden Kennwerte optisch kodiert werden: 1. Form, 2. Größe, 3. Elastizität und 4. kommerzielle Darreichung.

## Patentansprüche

1. Zahnrekonstruktionshilfsmittel (1) zur Verwendung als Anpreßelement zum seitlichen Anpressen einer um einen zu rekonstruierenden Zahn (11) gelegten Matrize (17), die als Formelement für eine in einem Zahnsubstanzdefekt (13) anzubringende Füllung fungiert, an den Zahn auf derjenigen Seite, die mit einem natürlichen Spalt (21) an die Seite eines benachbarten Zahns (15) angrenzt, dadurch gekennzeichnet, daß es aus einem elastischen Material besteht und eine langgestreckte Form mit einer Gesamtquerabmessung aufweist, die im entlasteten Zustand wenigstens abschnittsweise mindestens gleich der des natürlichen Spalts (21) abzüglich der Wandstärke der Matrize (17) ist und die sich bei einer Zugdehnung so weit verringert, daß sie kleiner ist als der natürliche Spalt (21).

2. Zahnrekonstruktionshilfsmittel nach Anspruch 1, dadurch gekennzeichnet, daß es im entspannten Zustand die Form eines Zylinders hat, dessen Durchmesser ca. 10 bis 200 % größer als die Breite des natürlichen Spalts (21) ist.

3. Zahnrekonstruktionshilfsmittel nach Anspruch 1, dadurch gekennzeichnet, daß es aus einer Vielzahl von elastischen Einzelfäden (23) besteht, die in Längsrichtung im wesentlichen parallel zueinander verlaufen und an beiden Enden zu einem Bündel zusammengefaßt sind.

4. Zahnrekonstruktionshilfsmittel nach Anspruch 1, dadurch gekennzeichnet, daß es im entspannten Zustand die Form eines länglichen Profilstabs hat, dessen Querabmessung wenigstens abschnittsweise ca. 10 bis 200 % größer als die Breite des natürlichen Spalts (21) ist.

5. Zahnrekonstruktionshilfsmittel nach Anspruch 1 oder 4, dadurch gekennzeichnet, daß er im entspannten Zustand einen sich entlang seiner Längserstreckung ändernden Querschnitt aufweist.

6. Zahnrekonstruktionshilfsmittel nach Anspruch 1 oder 5, dadurch gekennzeichnet, daß seine äußeren Begrenzungskanten im entspannten Zustand sternförmig verlaufen.

7. Zahnrekonstruktionshilfsmittel nach einem der Ansprüche 1, 2, 4, 5 oder 6, dadurch gekennzeichnet, daß es einen Hohlprofilquerschnitt besitzt.

8. Zahnrekonstruktionshilfsmittel nach einem der Ansprüche 1 bis 7, dadurch gekennzeichnet, daß das elastische Material synthetischer Kautschuk ist.

9. Zahnrekonstruktionshilfsmittel nach einem der Ansprüche 1 bis 8, dadurch gekennzeichnet, daß das elastische Material aus mehreren miteinander verbundenen Komponenten besteht, von denen nur ein Teil elastisches Verhalten zeigt.

10. Zahnrekonstruktionshilfsmittel nach einem der Ansprüche 1 bis 9, dadurch gekennzeichnet, daß es zumindest bereichsweise lichtleitend mit einem Brechungsindex ist, der sich bei einer Dehnung ändert oder gleich bleibt.

11. Zahnrekonstruktionshilfsmittel nach einem der Ansprüche 1 bis 10, dadurch gekennzeichnet, daß es in einem Spendergehäuse befindliche Meterware ist.

12. Zahnrekonstruktionshilfsmittel nach einem der Ansprüche 1 bis 10, dadurch gekennzeichnet, daß es im entspannten Zustand eine Längsabmessung von 10 bis 40 mm und an der breitesten Stelle eine Gesamtquerabmessung von 1 bis 10 mm besitzt.

13. Zahnrekonstruktionshilfsmittel nach einem der Ansprüche 1 bis 12, dadurch gekennzeichnet, daß es mit einer Kennfarbe eingefärt ist.
